# FASCICULE DE BREVET EUROPEEN

(11) **EP 1 867 132 B1**
(45) Date de publication et mention de la délivrance du brevet: **06.06.2018**
(21) Numéro de dépôt: 06726304.6
(22) Date de dépôt: 04.04.2006
(51) Int. Cl.: H04W 12/06, H04L 29/06

(54) **PROCEDE ET DISPOSITIFS DE CONTROLE DE PRESENCE D'UN TERMINAL SUR UN POINT D'ACCES A UN RESEAU DE TELEPHONIE**
VERFAHREN UND GERÄTE ZUR STEUERUNG DER PRÄSENZ EINES ENDGERÄTS AUF EINEM ZUGANGSPUNKT ZU EINEM TELEFONNETZ
METHOD AND APPARATUSES FOR CONTROLLING PRESENCE OF TERMINAL ON AN ACCESS POINT TO A TELEPHONE NETWORK

(30) Priorité: 07.04.2005 FR 0503493
(43) Date de publication de la demande: 19.12.2007
(73) Titulaire: Orange, 75015 Paris (FR)
(72) Inventeur: MARTIQUET, Nicolas, F-75015 Paris (FR); FOUQUET, Sylvie, F-92190 Meudon (FR); DRONNE, François, F-92330 Sceaux (FR)
(86) Numéro de dépôt international: PCT/FR2006/050294
(87) Numéro de publication internationale: WO 2006/106261

(56) Documents cités:
- WO-A-2004/079985
- WO-A-2004/110026
- US-A1- 2002 012 433
- US-A1- 2004 139 201
- ETSI: "Digital cellular telecommunications system (Phase2+); Generic access to the A/Gb interface; Stage 2 (3GPP TS 43.318 version 6.0.0 Release 6)" ETSI TS 143 318 V6.0.0 (2005-01), 31 janvier 2005 (2005-01-31), pages 1-69, XP002359225 France
- MALINEN J T: "NRC/COM SIM Authentication EAP extension over AAAv6 (SIM6) IPSO/Linux Design Document" 29 mai 2001 (2001-05-29), , XP002296876 page 8, alinéa 5.1 - page 9, alinéa 5.3
- ALA-LAURILA J ET AL: "WIRELESS LAN ACCESS NETWORK ARCHITECTURE FOR MOBILE OPERATORS" novembre 2001 (2001-11), IEEE COMMUNICATIONS MAGAZINE, IEEE SERVICE CENTER,NEW YORK, NY, US, PAGE(S) 82-89 , XP001107810 ISSN: 0163-6804 le document en entier

## Description

La présente invention concerne un procédé de contrôle de présence d'un terminal sur un point d'accès à un premier réseau de téléphonie à travers un deuxième réseau de communication.

L'invention trouve une application particulièrement avantageuse dans le domaine des accès au réseau coeur d'un réseau de téléphonie mobile à travers un réseau IP, par exemple un réseau IP de type ADSL supporté au moins en partie par un réseau de téléphonie fixe.

A titre d'exemple, l'accès au réseau de téléphonie mobile peut être réalisé par un terminal mobile en se connectant à une borne radio, de type Wi-Fi ou Bluetooth, laquelle est reliée au réseau coeur du réseau de téléphonie mobile par une liaison ADSL à travers une ligne de téléphonie fixe.

Ce type d'accès est régi par un consortium de constructeurs et d'opérateurs de télécommunications connu sous le nom d'UMA (Unlicensed Mobile Access) qui a défini une architecture pour connecter un réseau d'accès générique basé sur IP au réseau coeur du réseau de téléphonie mobile de l'opérateur. Cette architecture a été introduite au 3GPP dans le document 3GPP TS 43.318 et fait appel à une nouvelle entité appelée UNC (UMA Network Controller) par le consortium UMA ou GANC (Generic Access Network Controller) par le 3GPP. Cette entité GANC/UNC sert d'interface entre un réseau d'accès générique basé sur IP et le réseau coeur du réseau de téléphonie mobile. Elle est contrôlée par l'opérateur mobile.

Pour un opérateur de téléphonie mobile, la solution basée sur l'architecture UMA présente les avantages suivants :
- extension de la couverture géographique. En effet, pour un opérateur de téléphonie mobile ayant des difficultés de couverture de réseau (notamment en intérieur), cette solution permet d'utiliser le réseau de téléphonie fixe et la couverture DSL auxquels l'abonné a déjà souscrit, pour étendre la couverture à moindre coût. Deux types d'extension de couverture peuvent alors être envisagés :
   * couverture des zones blanches, c'est-à-dire non couvertes par le réseau mobile, GSM ou UMTS par exemple. L'opérateur peut de cette manière couvrir des secteurs géographiques dans lesquels il était absent auparavant.
   * complément à la couverture existante. Même lorsque la couverture du réseau de téléphonie mobile existe, la solution UMA permet de décharger le réseau mobile et d'offrir plus de capacité à l'opérateur.
- tarification de type domestique ("Home Zone"). Un certain nombre d'opérateurs souhaitent offrir une tarification spéciale à ceux de leurs clients qui utilisent leur terminal mobile lorsqu'ils sont chez eux. A cet effet, une solution de type UMA peut être intéressante car elle permet également un accès moins coûteux pour l'opérateur. Cependant, un moyen technique est nécessaire pour s'assurer que le client est réellement à son domicile afin de lui appliquer le tarif domestique.

Comme cela vient d'être souligné, l'un des objectifs que peut avoir un opérateur de téléphonie mobile en adoptant une solution de type UMA est de pratiquer une tarification particulière au client lorsqu'il est chez lui.

En effet, si le client a un accès ADSL Wi-Fi à son domicile, il est intéressant pour l'opérateur de lui appliquer un tarif plus attractif, car :
- l'opérateur du réseau mobile attire ainsi sur son réseau coeur un client qui, sinon, aurait davantage intérêt à utiliser son téléphone fixe,
- tout en soulageant son réseau d'accès radio.

Afin de pratiquer ce type de tarification, l'opérateur a donc besoin d'être absolument certain que le client est bien chez lui.

Pour cela, les solutions actuellement proposées sont:
- utilisation de la couverture du réseau mobile du client pour obtenir sa localisation. Cela signifie cependant que la solution ne fonctionne pas dans les zones blanches (voir plus haut). D'autre part, il faut s'assurer que le client ne peut pas modifier la donnée de localisation envoyée par son terminal vers le réseau.
- identification du point d'accès. Mais, encore une fois, les solutions actuellement proposées par les constructeurs reposent principalement sur un envoi de l'identifiant du point d'accès par le terminal, ce qui n'est pas très difficile à détourner par le client, ce dernier pouvant envoyer l'identifiant du point d'accès « domicile » alors qu'il ne s'y trouve pas.

Dans les deux cas, un client mal intentionné est capable de détourner l'information afin d'obtenir une tarification de type domestique (« Home Zone ») même lorsqu'il n'est pas à son domicile.

Les demandes de brevet WO2004/110026 A et US2002/012433 A1 divulguent des procédés d'authentification pour des terminaux de communication sans fils. Aussi, le problème technique à résoudre par l'objet de la présente invention est de proposer un procédé de contrôle de présence d'un terminal sur un point d'accès à un premier réseau de téléphonie à travers un deuxième réseau de communication, ledit point d'accès étant défini par une adresse dans ledit deuxième réseau de communication, qui permettrait à l'opérateur dudit premier réseau de connaître avec certitude l'identité et la localisation du point d'accès effectivement utilisé par le terminal du client.

La présent invention est définie par les revendications indépendantes 1 et 9-12.

La solution au problème technique posé consiste, selon la présente invention, en ce que ledit procédé comprend les étapes consistant à :
dans une phase d'initialisation,
   - associer audit point d'accès un module de certification,
   - établir une table de correspondance entre un identifiant dudit terminal et l'adresse dudit point d'accès,
puis, dans une phase de contrôle,
   - requérir auprès du terminal son identifiant et en déduire au moyen de ladite table de correspondance l'adresse dudit point d'accès dans le deuxième réseau,
   - envoyer, à ladite adresse, un défi afin de le fournir au module de certification associé,
   - déterminer par le module de certification une réponse audit défi,
   - transmettre ladite réponse au terminal,
   - retourner par le terminal un message contenant ladite réponse,
   - vérifier la réponse contenue dans ledit message.

Ainsi, on comprend, d'une part, que, grâce à la table de correspondance, le défi est bien envoyé au domicile du client, et d'autre part, que, si la réponse au défi est correcte, le terminal se trouve bien à ce domicile.

Afin de garantir la sécurité de la table de correspondance, l'invention prévoit que ladite table de correspondance est gérée par ledit premier réseau. De même, le niveau de sécurisation du procédé conforme à l'invention est encore augmenté si l'identifiant de terminal est requis à travers un lien sécurisé.

Selon l'invention, il est prévu que, ledit défi étant constitué par un nombre aléatoire fourni audit module de certification, la réponse audit défi est constituée par une signature calculée à partir dudit nombre aléatoire et d'une clé secrète préalablement fournie au module de certification.

Selon un autre exemple, il est prévu que, ledit défi étant constitué par un nombre aléatoire fourni audit module de certification, la réponse audit défi est constituée par le nombre aléatoire. Dans ce cas, il n'y a pas de clé secrète à provisionner dans le module de certification. Toutefois, l'unicité du défi permet d'associer de façon unique la réponse fournie à un module de certification particulier.

Par ailleurs, un module de certification d'un point d'accès pour la mise en oeuvre du procédé selon l'invention, est remarquable en ce que ledit module de certification est apte à :
- recevoir un défi,
- déterminer une réponse audit défi,
- transmettre ladite réponse au terminal.

De plus, un contrôleur de réseau d'accès générique pour la mise en oeuvre du procédé selon l'invention, est remarquable en ce que ledit contrôleur est apte à :
- fournir un défi à l'adresse dudit point d'accès,
- vérifier la réponse contenue dans le message retourné par ledit terminal.

Enfin, un système pour la mise en oeuvre du procédé selon l'invention, est remarquable en ce que ledit système comprend un contrôleur selon l'invention apte à gérer une pluralité de points d'accès, chaque point d'accès étant associé à un module respectif de certification selon l'invention.

La description qui va suivre en regard des dessins annexés, donnés à titre d'exemples non limitatifs, fera bien comprendre en quoi consiste l'invention et comment elle peut être réalisée.
La figure 1 est un schéma d'ensemble d'un système d'accès à un premier réseau, de téléphonie mobile, à travers un deuxième réseau de communication, en l'espèce un réseau IP, comme cela sera explicité plus loin.
La figure 2 est un diagramme des échanges d'informations effectués lors de la mise en oeuvre du procédé conforme à l'invention.
La figure 3 est un diagramme des échanges d'informations effectués lors de la mise en oeuvre du procédé conforme à un exemple.

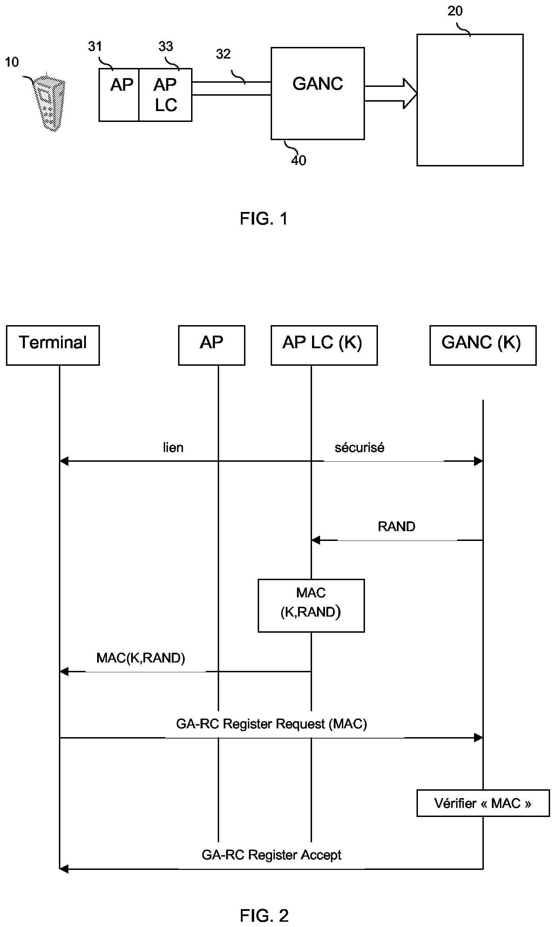

Sur la figure 1 est représentée une architecture UMA pour l'accès d'un terminal 10, un téléphone mobile par exemple, au réseau coeur 20 du premier réseau de téléphonie mobile d'un opérateur de téléphonie mobile.

Le client abonné audit premier réseau de téléphonie mobile dispose à son domicile d'une liaison radio, notamment une liaison Wi-Fi, entre son terminal 10 et une borne 31 qui constitue un point d'accès AP au réseau de téléphonie mobile. La borne 31 est reliée à une ligne téléphonique fixe 32 du client sur laquelle est réalisée une liaison IP, ici de type ADSL, entre ladite borne 31 et un contrôleur GANC 40. La ligne téléphonique 32 appartient ainsi à un réseau IP (celui que l'on a appelé "deuxième réseau") supporté au moins en partie par le réseau de téléphonie fixe auquel appartient la ligne téléphonique 32. On rappelle ici qu'un contrôleur GANC (Generic Access Network Controller) joue le rôle d'interface entre un réseau d'accès générique basé sur IP, en l'espèce le réseau IP supporté par la ligne téléphonique 32, et le réseau coeur 20 du réseau de téléphonie mobile.

Comme le montre la figure 1, le procédé de contrôle de présence du terminal 10 au point 31 d'accès AP implique la présence d'une entité 33 appelée module de certification de localisation du point d'accès AP LC, qu'on désignera en abrégé par « module de certification ». Ce module, dont le fonctionnement sera expliqué en détail plus loin, a pour but de s'assurer que le client utilise bien son point d'accès PA et qu'il est bien localisé au domicile du client, c'est-à-dire que celui-ci n'a pas déplacé son point d'accès à l'étranger, par exemple, pour éviter les frais de « roaming ».

Dans l'exemple particulier de la description, le point 31 d'accès et le module 33 de certification sont deux entités distinctes et connectées l'une à l'autre. Il faut noter que rien n'interdit que le module 33 de certification AP LC soit physiquement intégré au point 31 d'accès PA. Autrement dit, le point d'accès AP et le module AP LC peuvent être la même entité physique, mais ils peuvent aussi être séparés.

De même, et préalablement à la mise en oeuvre proprement dite du procédé selon l'invention, il est établi une table de correspondance entre un identifiant dudit terminal 10 et l'adresse dudit point 31 d'accès. A titre d'exemple, l'identifiant dudit terminal 10 est son numéro d'identification unique dans le réseau mobile (IMSI « International Mobile Subscriber Identity »). L'adresse du point 31 d'accès est universelle et également connue sous le nom de MAC («Medium Access Control).

De préférence, ladite table de correspondance est gérée par le réseau mobile et l'abonné du terminal 10 n'y a pas accès. A titre d'exemple, cette table est établie par le GANC 40 et mémorisée dans celui-ci.

Dans un premier mode de réalisation, une clé secrète permanente K est partagée entre le module de certification AP LC et le contrôleur GANC 40. Cette clé K est unique pour chaque couple AP LC/GANC. Par les termes "clé secrète", on entend bien entendu désigner une clé symétrique de chiffrement et de déchiffrement.

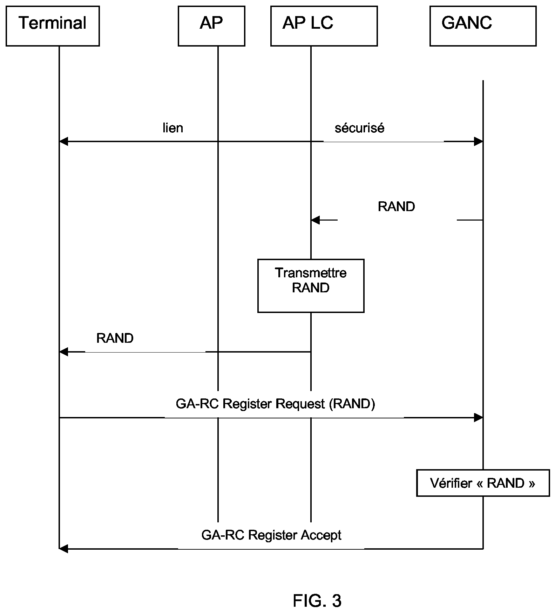

Après cette phase d'initialisation, le procédé conforme à l'invention se poursuit par une phase de contrôle qui va maintenant être décrite en référence aux figures 2 et 3, correspondant respectivement à deux modes de réalisation.

Tout d'abord, le terminal 10 et le contrôleur GANC 40 établissent un lien, conformément à la procédure « Registration » décrite dans la section 8.4.1.6.1 du document 3GPP TS 43.318 v2.0.0. A l'issue de cette étape, les deux entités se sont authentifiées et sont capables de communiquer en toute confidentialité. Lors de cette phase d'authentification, le terminal 10 fournit son identifiant au contrôleur GANC 40.

Ensuite, après avoir identifié le terminal 10, le contrôleur GANC 40 détermine au moyen de ladite table de correspondance l'adresse du point 31 d'accès AP au domicile du client

Puis, le contrôleur GANC 40 génère un défi sous forme d'un nombre aléatoire RAND et l'envoie au point 31 d'accès AP afin de le transmettre au module 33 de certification AP LC. Dans un mode particulier de réalisation, le point d'accès peut être identifié par le numéro de téléphone associé à la ligne téléphonique 32 fixe au domicile du client. Dans ce cas, le numéro de téléphone est inclus dans la table de correspondance. Le défi RAND peut être envoyé, par exemple, par un message court (SMS) fixe sur ladite ligne téléphonique fixe du client.

Selon l'invention en réponse au défi, le module 33 de certification AP LC calcule alors une signature à partir de la clé secrète K et du nombre aléatoire RAND reçu du contrôleur GANC. Cette signature porte le nom de MAC (Message Authentication Code). Elle est basée sur la fonction HMAC définie dans le RFC 2104 (par exemple HMAC-SHA1). Elle constitue la réponse au défi.

Selon l'autre exemple, en réponse au défi, le module 33 de certification renvoie le nombre aléatoire RAND lui-même, tel que reçu du contrôleur GANC sans modification. La réponse est transmise au terminal 10 via la liaison radio locale Wi-Fi, et le terminal 10 la retourne au contrôleur GANC 40 à travers la ligne téléphonique fixe 32. De manière pratique, on utilise pour cette transmission le message connu sous le nom de GA-RC Register Request conforme à la procédure « Registration » précitée, la réponse au défi étant incluse dans le champ AP-ID de ce message.

Enfin, le contrôleur GANC 40 vérifie la réponse qui lui est ainsi retournée par le terminal 10. Si la vérification est positive, on en conclut que client utilise bien son point 31 d'accès et, dans la variante décrite ci-dessus, à son domicile. Le contrôleur GANC 40 envoie alors au terminal 10 un message d'acceptation GA-RC Register Accept conforme également à la procédure « Registration » précitée.

## Revendications

1. Procédé de contrôle de présence d'un terminal (10) sur un point (31) d'accès à un premier réseau de téléphonie à travers un deuxième réseau de communication, ledit point (31) d'accès étant défini par une adresse dans ledit deuxième réseau de communication et étant associé à un module (33) de certification, une table de correspondance étant établie entre un identifiant dudit terminal (10) et l'adresse dudit point (31) d'accès, ledit procédé comprend les étapes consistant à :
- requérir par un contrôleur (40) auprès du terminal (10) son identifiant et en déduire au moyen de ladite table de correspondance l'adresse dudit point (31) d'accès dans le deuxième réseau,
- envoyer par le contrôleur (40), à ladite adresse, un défi constitué par un nombre aléatoire (RAND) afin de le fournir au module (33) de certification associé,- déterminer par le module (33) de certification une réponse (MAC; RAND) audit défi, constituée par une signature (MAC) calculée à partir dudit nombre aléatoire (RAND) et d'une clé secrète (K) préalablement fournie au module (33) de certification,
- transmettre par le module (33) de certification ladite réponse (MAC; RAND) au terminal (10),
- retourner par le terminal (10) à destination du contrôleur (40) un message (GA-RC Register Request) contenant ladite réponse,
- vérifier par le contrôleur (40) la réponse (MAC; RAND) contenue dans ledit message.

2. Procédé selon la revendication 1, **caractérisé en ce que** ladite table de correspondance est gérée par ledit premier réseau.

3. Procédé selon l'une des revendications 1 ou 2, **caractérisé en ce que** l'identifiant de terminal (10) est requis à travers un lien sécurisé.

4. Procédé selon l'une quelconque des revendications 1 à 3, **caractérisé en ce que**, ledit défi étant constitué par un nombre aléatoire (RAND) fourni audit module (33) de certification, la réponse audit défi est constituée par une signature (MAC) calculée à partir dudit nombre aléatoire (RAND) et d'une clé secrète (K) préalablement fournie au module (33) de certification.

5. Procédé selon l'une quelconque des revendications 1 à 3, **caractérisé en ce que**, ledit défi étant constitué par un nombre aléatoire (RAND) fourni audit module (33) de certification, la réponse audit défi est constituée par ledit nombre aléatoire (RAND).

6. Procédé selon l'une quelconque des revendications 1 à 5, **caractérisé en ce que** ledit premier réseau de téléphonie est un réseau de téléphonie mobile, et **en ce que** ledit deuxième réseau de communication est un réseau IP.

7. Procédé selon la revendication 6, **caractérisé en ce que** le point (31) d'accès est relié à une ligne de téléphonie fixe supportant une liaison IP et **en ce que** l'adresse dudit point (31) d'accès dans la table de correspondance comprend le numéro de ladite ligne téléphonique.

8. Procédé selon la revendication 7, **caractérisé en ce que** ledit défi (RAND) est envoyé par un message court, SMS, via la ligne de téléphonie fixe d'accès au réseau IP.

9. Module (33) de certification d'un point (31) d'accès à un premier réseau de téléphonie à travers un deuxième réseau de communication pour la mise en oeuvre du procédé de contrôle de présence d'un terminal (10) sur un point (31) d'accès selon l'une quelconque des revendications 1 à 8, ledit point (31) d'accès étant défini par une adresse dans ledit deuxième réseau de communication et associé audit module (33) de certification, une table de correspondance étant établie entre un identifiant dudit terminal et l'adresse dudit point (31) d'accès, ledit module (33) de certification étant apte à :
- recevoir un défi (RAND),
- déterminer une réponse (MAC; RAND) audit défi (RAND),
- transmettre ladite réponse (MAC; RAND) au terminal (10).

10. Contrôleur (40) de réseau d'accès générique pour la mise en oeuvre du procédé de contrôle de présence d'un terminal (10) sur un point (31) d'accès à un premier réseau de téléphonie à travers un deuxième réseau de communication selon l'une quelconque des revendications 1 à 8, ledit point (31) d'accès étant défini par une adresse dans ledit deuxième réseau de communication et associé à un module (33) de certification, une table de correspondance étant établie entre un identifiant dudit terminal (10) et l'adresse dudit point (31) d'accès, ledit contrôleur (40) étant apte à :
- obtenir auprès du terminal (10) son identifiant et en déduire au moyen de ladite table de correspondance l'adresse dudit point (31) d'accès dans le deuxième réseau,
- fournir un défi (RAND) à l'adresse dudit point (31) d'accès,
- vérifier la réponse (MAC; RAND) contenue dans le message (GA-RC Register Request) retourné par ledit terminal (10).

11. Système pour la mise en oeuvre du procédé selon l'une quelconque des revendications 1 à 8, **caractérisé en ce que** ledit système comprend un contrôleur (40) selon la revendication 10 apte à gérer une pluralité de points (31) d'accès, chaque point d'accès étant associé à un module respectif (33) de certification selon la revendication 9.

12. Terminal (10) pour la mise en oeuvre du procédé de contrôle de présence du terminal (10) sur un point (31) d'accès à un premier réseau de téléphonie à travers un deuxième réseau de communication selon l'une quelconque des revendications 1 à 8, ledit point (31) d'accès étant défini par une adresse dans ledit deuxième réseau de communication et associé à un module (33) de certification, une table de correspondance étant établie entre un identifiant dudit terminal (10) et l'adresse dudit point (31) d'accès, ledit terminal (10) étant apte à :
- transmettre l'identifiant à un contrôleur (40) de réseau,
- recevoir une réponse (MAC;RAND) du module (33) de certification
- envoyer ladite réponse au contrôleur (40).

## Patentansprüche

1. Verfahren zur Kontrolle der Präsenz eines Endgerätes (10) an einem Zugangspunkt (31) zu einem ersten Telefonnetz über ein zweites Kommunikationsnetz, wobei der Zugangspunkt (31) durch eine Adresse in dem zweiten Kommunikationsnetz definiert ist und einem Zertifizierungsmodul (33) zugeordnet ist, wobei eine Entsprechungstabelle zwischen einer Kennung des Endgerätes (10) und der Adresse des Zugangspunktes (31) erstellt ist,
wobei das Verfahren die folgenden Schritte umfasst:
- Anfordern, durch eine Steuereinrichtung (40) von dem Endgerät (10), von dessen Kennung, und Ableiten daraus, mittels der Entsprechungstabelle, der Adresse des Zugangspunktes (31) in dem zweiten Netz,
- Senden, durch die Steuereinrichtung (40) an die Adresse, einer Abfrage, die aus einer Zufallszahl (RAND) besteht, um sie an das zugeordnete Zertifizierungsmodul (33) zu liefern;
- Bestimmen, durch das Zertifizierungsmodul (33), einer Antwort (MAC; RAND) auf die Abfrage, die aus einer Signatur (MAC) besteht, welche aus der Zufallszahl (RAND) und einem zuvor an das Zertifizierungsmodul (33) gelieferten geheimen Schlüssel (K) berechnet wurde,
- Übertragen, durch das Zertifizierungsmodul (33), der Antwort (MAC; RAND) zum Endgerät (10),
- Rücksenden, durch das Endgerät (10) an die Steuereinrichtung (40), einer Nachricht (GA-RC Register Request), welche die Antwort enthält,
- Überprüfen, durch die Steuereinrichtung (40), der in der Nachricht enthaltenen Antwort (MAC; RAND).

2. Verfahren nach Anspruch 1, **dadurch gekennzeichnet, dass** die Entsprechungstabelle von dem ersten Netz verwaltet wird.

3. Verfahren nach einem der Ansprüche 1 oder 2, **dadurch gekennzeichnet, dass** die Kennung des Endgerätes (10) über eine gesicherte Verbindung angefordert wird.

4. Verfahren nach einem der Ansprüche 1 bis 3, **dadurch gekennzeichnet, dass**, wenn die Abfrage aus einer Zufallszahl (RAND) besteht, die an das Zertifizierungsmodul (33) geliefert wird, die Antwort auf die Abfrage aus einer Signatur (MAC) besteht, welche aus der Zufallszahl (RAND) und einem zuvor an das Zertifizierungsmodul (33) gelieferten geheimen Schlüssel (K) berechnet wurde.

5. Verfahren nach einem der Ansprüche 1 bis 3, **dadurch gekennzeichnet, dass**, wenn die Abfrage aus einer Zufallszahl (RAND) besteht, die an das Zertifizierungsmodul (33) geliefert wird, die Antwort auf die Abfrage aus der Zufallszahl (RAND) besteht.

6. Verfahren nach einem der Ansprüche 1 bis 5, **dadurch gekennzeichnet, dass** das erste Telefonnetz ein Mobiltelefonnetz ist, und dadurch, dass das zweite Kommunikationsnetz ein IP-Netz ist.

7. Verfahren nach Anspruch 6, **dadurch gekennzeichnet, dass** der Zugangspunkt (31) mit einer Festnetztelefonleitung verbunden ist, die eine IP-Verbindung unterstützt, und dadurch, dass die Adresse des Zugangspunktes (31) in der Entsprechungstabelle die Nummer dieser Telefonleitung umfasst.

8. Verfahren nach Anspruch 7, **dadurch gekennzeichnet, dass** die Abfrage (RAND) durch eine Kurznachricht (SMS) über die Festnetztelefonleitung mit Zugang zum IP-Netz gesendet wird.

9. Zertifizierungsmodul (33) eines Zugangspunktes (31) zu einem ersten Telefonnetz über ein zweites Kommunikationsnetz zur Durchführung des Verfahrens zur Kontrolle der Präsenz eines Endgerätes (10) an einem Zugangspunkt (31) nach einem der Ansprüche 1 bis 8,
wobei der Zugangspunkt (31) durch eine Adresse in dem zweiten Kommunikationsnetz definiert ist und dem Zertifizierungsmodul (33) zugeordnet ist, wobei eine Entsprechungstabelle zwischen einer Kennung des Endgerätes (10) und der Adresse des Zugangspunktes (31) erstellt ist, wobei das Zertifizierungsmodul (33) in der Lage ist:
- eine Abfrage (RAND) zu empfangen,
- eine Antwort (MAC; RAND) auf die Abfrage (RAND) zu bestimmen,
- diese Antwort (MAC; RAND) zu dem Endgerät (10) zu übertragen.

10. Generische Zugangsnetz-Steuereinrichtung (40) zur Durchführung des Verfahrens zur Kontrolle der Präsenz eines Endgerätes (10) an einem Zugangspunkt (31) zu einem ersten Telefonnetz über ein zweites Kommunikationsnetz nach einem der Ansprüche 1 bis 8,
wobei der Zugangspunkt (31) durch eine Adresse in dem zweiten Kommunikationsnetz definiert ist und einem Zertifizierungsmodul (33) zugeordnet ist, wobei eine Entsprechungstabelle zwischen einer Kennung des Endgerätes (10) und der Adresse des Zugangspunktes (31) erstellt ist,
wobei die Steuereinrichtung (40) in der Lage ist:
- von dem Endgerät (10) dessen Kennung zu beziehen und daraus mittels der Entsprechungstabelle die Adresse des Zugangspunktes (31) in dem zweiten Netz abzuleiten,
- eine Abfrage (RAND) an die Adresse des Zugangspunktes (31) zu übermitteln,
- die Antwort (MAC; RAND) zu überprüfen, die in der von dem Endgerät (10) zurückgesendeten Nachricht (GA-RC Register Request) enthalten ist.

11. System zur Durchführung des Verfahrens nach einem der Ansprüche 1 bis 8, **dadurch gekennzeichnet, dass** das System eine Steuereinrichtung (40) nach Anspruch 10 umfasst, die in der Lage ist, mehrere Zugangspunkte (31) zu verwalten, wobei jeder Zugangspunkt einem jeweiligen Zertifizierungsmodul (33) nach Anspruch 9 zugeordnet ist.

12. Endgerät (10) zur Durchführung des Verfahrens zur Kontrolle der Präsenz des Endgerätes (10) an einem Zugangspunkt (31) zu einem ersten Telefonnetz über ein zweites Kommunikationsnetz nach einem der Ansprüche 1 bis 8, wobei der Zugangspunkt (31) durch eine Adresse in dem zweiten Kommunikationsnetz definiert ist und einem Zertifizierungsmodul (33) zugeordnet ist, wobei eine Entsprechungstabelle zwischen einer Kennung des Endgerätes (10) und der Adresse des Zugangspunktes (31) erstellt ist, wobei das Endgerät (10) in der Lage ist:
- die Kennung zu einer Netzsteuereinrichtung (40) zu übertragen,
- eine Antwort (MAC; RAND) von dem Zertifizierungsmodul (33) zu empfangen,
- die Antwort an die Steuereinrichtung (40) zu senden.

## Claims

1. Method for monitoring the presence of a terminal (10) on an access point (31) to a first telephony network through a second communication network, said access point (31) being defined by an address in said second communication network and being associated with a certification module (33), a correspondence table being established between an identifier of said terminal (10) and the address of said access point (31),
said method comprising the steps consisting in:
- a controller (40) requesting, from the terminal (10), its identifier and deducing therefrom, by way of said correspondence table, the address of said access point (31) in the second network,
- the controller (40) sending, to said address, a challenge consisting of a random number (RAND) so as to provide this to the associated certification module (33),
- the certification module (33) determining a response (MAC; RAND) to said challenge, consisting of a signature (MAC) calculated on the basis of said random number (RAND) and of a secret key (K) provided beforehand to the certification module (33),
- the certification module (33) transmitting said response (MAC; RAND) to the terminal (10),
- the terminal (10) returning a message (GA-RC Register Request) containing said response to the controller (40),
- the controller (40) verifying the response (MAC; RAND) contained in said message.

2. Method according to Claim 1, **characterized in that** said correspondence table is managed by said first network.

3. Method according to either of Claims 1 and 2, **characterized in that** the terminal (10) identifier is requested through a secure link.

4. Method according to any one of Claims 1 to 3, **characterized in that**, with said challenge consisting of a random number (RAND) provided to said certification module (33), the response to said challenge consists of a signature (MAC) calculated on the basis of said random number (RAND) and of a secret key (K) provided beforehand to the certification module (33) .

5. Method according to any one of Claims 1 to 3, **characterized in that**, with said challenge consisting of a random number (RAND) provided to said certification module (33), the response to said challenge consists of said random number (RAND).

6. Method according to any one of Claims 1 to 5, **characterized in that** said first telephony network is a mobile telephony network, and **in that** said second communication network is an IP network.

7. Method according to Claim 6, **characterized in that** the access point (31) is linked to a fixed telephone line supporting an IP link, and **in that** the address of said access point (31) in the correspondence table comprises the number of said telephone line.

8. Method according to Claim 7, **characterized in that** said challenge (RAND) is sent via a short message, SMS, via the fixed telephone line for accessing the IP network.

9. Certification module (33) for an access point (31) to a first telephony network through a second communication network for implementing the method for monitoring the presence of a terminal (10) on an access point (31) according to any one of Claims 1 to 8, said access point (31) being defined by an address in said second communication network and associated with said certification module (33), a correspondence table being established between an identifier of said terminal and the address of said access point (31), said certification module (33) being able to:
- receive a challenge (RAND),
- determine a response (MAC; RAND) to said challenge (RAND),
- transmit said response (MAC; RAND) to the terminal (10) .

10. Generic access network controller (40) for implementing the method for monitoring the presence of a terminal (10) on an access point (31) to a first telephony network through a second communication network according to any one of Claims 1 to 8, said access point (31) being defined by an address in said second communication network and associated with a certification module (33), a correspondence table being established between an identifier of said terminal (10) and the address of said access point (31),
said controller (40) being able to:
- obtain, from the terminal (10), its identifier and deduce therefrom, by way of said correspondence table, the address of said access point (31) in the second network,
- provide a challenge (RAND) to the address of said access point (31),
- verify the response (MAC; RAND) contained in the message (GA-RC Register Request) returned by said terminal (10).

11. System for implementing the method according to any one of Claims 1 to 8, **characterized in that** said system comprises a controller (40) according to Claim 10 that is able to manage a plurality of access points (31), each access point being associated with a respective certification module (33) according to Claim 9.

12. Terminal (10) for implementing the method for monitoring the presence of the terminal (10) on an access point (31) to a first telephony network through a second communication network according to any one of Claims 1 to 8, said access point (31) being defined by an address in said second communication network and associated with a certification module (33), a correspondence table being established between an identifier of said terminal (10) and the address of said access point (31), said terminal (10) being able to:
- transmit the identifier to a network controller (40),
- receive a response (MAC; RAND) from the certification module (33),
- send said response to the controller (40).
